# EUROPÄISCHE PATENTSCHRIFT

(11) **EP 3 165 403 B1**
(45) Veröffentlichungstag und Bekanntmachung des Hinweises auf die Patenterteilung: **10.04.2019**
(21) Anmeldenummer: 16196012.5
(22) Anmeldetag: 27.10.2016
(51) Int. Cl.: B60Q 1/08, G01C 21/36

(54) **VERFAHREN ZUM STEUERN EINER SCHEINWERFERANORDNUNG FÜR EIN FAHRZEUG**
METHOD FOR CONTROLLING A HEADLIGHT ASSEMBLY FOR A VEHICLE
PROCÉDÉ DE COMMANDE D'UN SYSTÈME DE PHARE POUR UN VÉHICULE AUTOMOBILE

(30) Priorität: 06.11.2015 DE 102015221810
(43) Veröffentlichungstag der Anmeldung: 10.05.2017
(73) Patentinhaber: VOLKSWAGEN AKTIENGESELLSCHAFT, 38440 Wolfsburg (DE)
(72) Erfinder: Dr. Max, Stephan, 38518 Gifhorn (DE); Dick, Eugen, 12043 Berlin (DE); Miemietz, Stefan, 14612 Falkensee (DE)

(56) Entgegenhaltungen:
- EP-A2- 2 088 365
- WO-A1-2015/159599
- DE-A1-102006 000 276
- DE-A1-102007 038 084
- DE-A1-102009 054 243
- DE-A1-102014 203 313
- JP-A- 2014 189 198

## Beschreibung

Die vorliegende Erfindung betrifft ein Verfahren zum Steuern einer Scheinwerferanordnung für ein Fahrzeug, wobei die Scheinwerferanordnung einen rechten Scheinwerfer und einen linken Scheinwerfer aufweist, wobei der rechte Scheinwerfer ein rechtes Lichtbündel und der linke Scheinwerfer ein linkes Lichtbündel emittiert.

Die Scheinwerfer eines Fahrzeugs haben die Aufgabe, bei schlechten Sichtverhältnissen, insbesondere bei Dunkelheit, die Umgebung in Fahrtrichtung vor dem Fahrzeug, insbesondere die Fahrbahn, auszuleuchten. Zusätzlich dienen die Scheinwerfer als Erkennungsmerkmal für andere Verkehrsteilnehmer.

Scheinwerfersysteme zum Bereitstellen verschiedener Lichtfunktionen sind als solche bekannt. Die Lichtemission solcher Scheinwerfersysteme ist steuerbar, so dass die auszusendende Lichtverteilung variiert werden kann. Neben vom Fahrer manuell zu steuernden Lichtfunktionen, wie z.B. das manuelle Umschalten zwischen einem Abblendlicht und einem Fernlicht, sind auch automatisch regelbare Lichtfunktionen bekannt, bei denen in Abhängigkeit von Fahrzeuginformationen die Abstrahlcharakteristik der Scheinwerfer automatisch geregelt wird. Auf diese Weise kann die von den Scheinwerfern zu emittierende Lichtverteilung an den voraus liegenden Streckenabschnitt, die Verkehrssituation, die Lichtverhältnisse und die Wetterbedingungen angepasst werden, um die Sicht des Fahrers zu verbessern und gegebenenfalls die Blendung anderer Verkehrsteilnehmer zu reduzieren. Die Lichtverteilung wird z.B. als Kurvenlicht in Abhängigkeit vom Lenkwinkel oder einem erfassten voraus liegenden Kurvenabschnitt angepasst.

Die Lichtverteilungen von Scheinwerfern werden direkt auf die Fahrbahn vor dem Fahrzeug erzeugt. Diese Platzierung der Lichtverteilung direkt im Sichtfeld des Fahrers, ermöglicht es, den Fahrer bei der Fahrt zu assistieren, ohne dass er den Blick von der Fahrbahn nehmen muss. Dazu können Muster, welche Hinweise an den Fahrer ausgeben, in die Lichtverteilung hineinprojiziert werden. In der Regel müssen dafür jedoch separate Bauteile in den Scheinwerfern verbaut werden.

Die DE 103 54 104 A1 beschreibt ein Verfahren zur Steuerung der Ausleuchtung eines seitlichen Fahrbahnbereiches mittels eines Hilfsscheinwerfers. Im Umfeld des Fahrzeugs werden Objekte, insbesondere Fußgänger, z.B. durch ein Nachtsichtsystem erfasst. Mittels eines Algorithmus wird eine Unfallgefahr erkannt und bei einer Kollisionswahrscheinlichkeit des Objekts mit dem Fahrzeug wird der Hilfsscheinwerfer auf das Objekt ausgerichtet.

Die DE 10 2006 050 546 A1 beschreibt eine Laserprojektionseinheit, mittels welcher ein Projektionsobjekt an einer Projektionsstelle außerhalb eines Kraftfahrzeugs erzeugt wird.

Ein gattungsgemäße Verfahren ist aus DE 10 2007 038 084 bekannt.

Es ist die Aufgabe der vorliegenden Erfindung, ein Verfahren bereitzustellen, mittels welchem in der Lichtverteilung vor dem Fahrzeug Hinweise an den Fahrer ausgegeben werden können, wobei dies kostengünstig und bauraumsparend realisiert wird.

Diese Aufgabe wird erfindungsgemäß durch ein Verfahren mit den Merkmalen des Anspruchs 1 gelöst. Vorteilhafte Aus- und Weiterbildungen ergeben sich aus den abhängigen Ansprüchen.

Bei dem erfindungsgemäßen Verfahren wird mittels des linken und des rechten Lichtbündels eine Ausgangslichtverteilung erzeugt. Weiterhin wird von einem Assistenzsystem des Fahrzeugs ein Signal erzeugt, welches einen Navigationshinweis für ein zukünftiges Fahrmanöver für den Fahrer an die Scheinwerferanordnung übermittelt. In Abhängigkeit von dem Signal wird eine Gesamtlichtverteilung erzeugt, bei der mit dem rechten Lichtbündel und dem linken Lichtbündel Seitenbereiche gebildet werden, zwischen denen ein Bereich gebildet wird, welcher eine niedrigere Lichtintensität aufweist als die Seitenbereiche, und dessen Form für den Fahrer den Navigationshinweis innerhalb der Gesamtlichtverteilung wiedergibt.

Die Form des lichtintensitätsgeringeren Bereichs stellt dabei insbesondere ein Muster dar. Um ein solches Muster zu erzeugen bedarf es erfindungsgemäß keiner separat im Scheinwerfer verbauter Musterprojektionseinheiten. Der Navigationshinweis bezieht sich dabei insbesondere auf zukünftige Fahrmanöver. Der Navigationshinweis bietet dem Fahrer daher Unterstützung bei einer Navigation seines Fahrzeugs. Der Navigationshinweis kann es dem Fahrer beispielsweise erleichtern, zu entscheiden, ob er ein Fahrmanöver überhaupt ausführt. Zudem kann der Navigationshinweis dem Fahrer auch zukünftige Lenkrichtungen, beispielsweise zum Einhalten einer zu befahrenden Route, anzeigen.

Insbesondere umfassen das linke und das rechte Lichtbündel zum Erzeugen der Gesamtlichtverteilung eine im Wesentlichen vertikale Hell-Dunkel-Grenze, wobei zum Erzeugen des Bereichs in der Gesamtlichtverteilung die vertikale Hell-Dunkel-Grenze des linken Lichtbündels links von der vertikalen Hell-Dunkel-Grenze des rechten Lichtbündels liegt. Zudem wird in der Gesamtlichtverteilung zwischen den Seitenbereichen ein Mittelbereich gebildet, der im Wesentlichen die gleiche Lichtintensität aufweist wie die Seitenbereiche, wobei der Bereich durch die Bildung des Mittelbereichs eine im Wesentlichen horizontale Hell-Dunkel-Grenze aufweist. Hierdurch kann vorteilhafterweise gewährleistet werden, dass das Nahfeld vor dem Fahrzeug ausgeleuchtet wird. Die Gesamtlichtverteilung kann dann trotz des lichtintensitätsgeringen Bereichs eine ausreichende Beleuchtung der Fahrzeugumgebung bereitstellen.

Zudem kann mittels der durch den Mittelbereich bereitgestellten horizontalen Hell-Dunkel-Grenze eine größere Vielfalt an Formen, die der Navigationshinweis annehmen kann, bereitgestellt werden. Die in Bezug auf die Hell-Dunkel-Grenze verwendeten Begriffe horizontal und vertikal beziehen sich auf die Lichtverteilung auf einem senkrecht zur Lichtemissionsrichtung angeordneten Messschirm. Eine horizontale Hell-Dunkel-Grenze verläuft in diesem Fall parallel zu der Horizontalachse. Eine vertikale Hell-Dunkel-Grenze verläuft senkrecht zu der Horizontalachse.

In einer Ausgestaltung des erfindungsgemäßen Verfahrens wird zumindest ein Objekt in Fahrtrichtung vor dem Fahrzeug erfasst, wobei das Objekt Teil einer Fahrwegverengung ist. Es wird die Breite des Fahrzeugs ermittelt. Der Navigationshinweis unterstützt dann den Fahrer beim Einfahren in die Fahrwegverengung. Zum Erzeugen der Gesamtlichtverteilung werden die vertikalen Hell-Dunkel-Grenzen der Lichtbündel derart ausgerichtet, dass der Bereich als Navigationshinweis einen Korridor mit geringerer Lichtintensität als die Seitenbereiche im Wesentlichen mit der Breite des Fahrzeugs umfasst. Der Korridor zeigt dem Fahrer einen Fahrschlauch im Wesentlichen mit der Breite des Fahrzeugs an. Im Wesentlichen bedeutet hierbei, dass der Korridor neben der genauen Breite auch eine geringfügig größere bzw. geringere Breite als die Breite des Fahrzeugs aufweisen kann, z.B. eine um 10% oder 5% größere Breite. Durch die Anzeige der Breite des Fahrzeugs kann der Fahrer dann besser einschätzen, ob er mit dem Fahrzeug das Fahrmanöver des Einfahrens in die Fahrwegverengung ungehindert ausführen kann. Alternativ oder zusätzlich kann auch die Breite der Fahrwegverengung ermittelt werden. Zum Erzeugen der Gesamtlichtverteilung werden die vertikalen Hell-Dunkel-Grenzen der Lichtbündel dann derart ausgerichtet, dass der Bereich als Navigationshinweis einen Korridor mit geringerer Lichtintensität als die Seitenbereiche im Wesentlichen mit der Breite der Fahrwegverengung umfasst. Dem Fahrer wird dann anstelle der Breite des Fahrzeugs die Breite der Fahrwegverengung auf der Fahrbahn angezeigt. Werden beide Breiten in der zweiten Gesamtlichtverteilung angezeigt, kann der Fahrer die Breite des Fahrzeugs direkt in Relation zur Breite der Fahrwegverengung setzen. Dies erleichtert dem Fahrer die Entscheidung, ob er das Fahrzeug durch die Fahrwegverengung manövriert.

In einer weiteren Ausgestaltung werden die vertikalen Hell-Dunkel-Grenzen dadurch ausgerichtet, dass die horizontalen Schwenkwinkel der Scheinwerfer gleich sind, so dass die Lichtemissionsrichtungen der Scheinwerfer parallel zueinander ausgerichtet werden. Weiterhin können im Strahlengang der Scheinwerfer verschiebbare mechanische Elemente angeordnet sein, welche die Hell-Dunkel-Grenzen der Lichtbündel erzeugen. Die vertikalen Hell-Dunkel-Grenzen werden dann durch Verschieben der mechanischen Elemente ausgerichtet. Solche verschiebbaren Elemente sind beispielsweise Blendenwalzen, die ohnehin in den Scheinwerfern zur Erzeugung der Hell-Dunkel-Grenzen, insbesondere zur Erzeugung von L-förmigen Hell-Dunkel-Grenzen, verbaut sind. Zudem kann die vertikale Hell-Dunkel-Grenze auch durch eine Kombination von Verschwenken der Scheinwerfer und Verschieben der Blendenwalzen erfolgen.

In einer anderen Ausgestaltung des erfindungsgemäßen Verfahrens wird eine Lenkbewegung erfasst, wobei die Richtung der Lenkbewegung ermittelt wird. Es werden die Lichtemissionsrichtungen der beiden Scheinwerfer in Richtung der Lenkbewegung um eine vertikale Achse derart verschwenkt, dass der Winkel, um den die Lichtemissionsrichtungen der Scheinwerfer um die vertikale Achse verschwenkt werden, nach dem Verschwenken im Wesentlichen gleich ist, so dass die Lichtemissionsrichtungen der Scheinwerfer auch nach dem Verschwenken parallel zueinander ausgerichtet sind. Der Korridor zeigt dem Fahrer dann eine Vorausschau des Fahrschlauchs auf der Fahrbahn an.

Das Signal, welches an die Scheinwerfer übermittelt wird, wird dabei insbesondere von einem Kamerasystem erzeugt, welches das Objekt erfasst und die Fahrwegverengung als solche identifiziert.

In einer weiteren Ausgestaltung des erfindungsgemäßen Verfahrens umfasst der Navigationshinweis eine Richtungsanweisung zum Einhalten einer gewünschten Route. Zum Erzeugen der Gesamtlichtverteilung werden die vertikalen Hell-Dunkel-Grenzen der Lichtbündel derart ausgerichtet, dass der Bereich auf der Fahrbahn ein richtungsweisendes Muster bildet. Die horizontale Hell-Dunkel-Grenze kann dabei zudem verwendet werden, um ein deutliches richtungsweisendes Muster in der Gesamtlichtverteilung zu erzeugen. Dadurch werden dem Fahrer vorteilhafterweise Richtungsanweisungen direkt auf die Fahrbahn projiziert. Der Fahrer muss seinen Blick nicht von der Fahrbahn wenden und auf ein innerhalb des Fahrzeugs angeordnetes Display richten.

Insbesondere werden die Hell-Dunkel-Grenzen durch Schwenken der Lichtemissionsrichtungen der beiden Scheinwerfer um eine vertikale Achse ausgerichtet. Für eine Richtungsanweisung geradeaus werden die Lichtemissionsrichtungen der Scheinwerfer insbesondere um die vertikale Achse ausgehend von einer parallelen Ausrichtung der Scheinwerfer zueinander um den gleichen Winkelbetrag aufeinander zu verschwenkt werden. Die Schwenkwinkel weisen dabei insbesondere einen Betrag zwischen 0,5° und 3° auf. Bevorzugt beträgt der Betrag der Schwenkwinkel 1,5°. Das richtungsweisende Muster erhält durch die gleichen Schwenkwinkelbeträge eine gleichmäßige nach vorne zeigende Form. Die Wahl des Betrags der Schwenkwinkel bestimmt dabei die Länge des richtungsweisenden Musters in der Gesamtlichtverteilung. Wird zusätzlich die horizontale Hell-Dunkel-Grenze zur Erzeugung des richtungsweisenden Musters verwendet, weist es insbesondere die Form eines gleichschenkeligen Dreiecks in der Gesamtlichtverteilung auf. Das richtungsweisende Muster ist dann insbesondere als geradeaus zeigende Pfeilspitze ausgestaltet.

Für eine Richtungsanweisung nach rechts wird zumindest die Lichtemissionsrichtung des linken Scheinwerfers um die vertikale Achse nach rechts verschwenkt und/oder für eine Richtungsanweisung nach links wird zumindest die Lichtemissionsrichtung des rechten Scheinwerfers um die vertikale Achse nach links verschwenkt. Zusätzlich kann für die Richtungsanweisung nach rechts die Lichtemissionsrichtung des rechten Scheinwerfers um die vertikale Achse nach rechts verschwenkt werden und/oder für die Richtungsanweisung nach links kann zusätzlich die Lichtemissionsrichtung des linken Scheinwerfers um die vertikale Achse nach links verschwenkt werden. Zur Bildung des Musters zur Richtungsanweisung nach rechts oder links können die maximalen Schwenkbereiche des linken und rechten Scheinwerfers ausgenutzt werden. Die Pfeilspitze kann dadurch um einen Winkel von zwischen 1° und 15° auf der Fahrbahn nach links oder rechts zeigen. Insbesondere können die Pfeilspitzen um einen maximalen Wert von 10° auf der Fahrbahn nach rechts oder links zeigen.

Das Signal, welches an die Scheinwerfer übermittelt wird, kann dabei insbesondere von einem im Fahrzeug angeordneten Navigationssystem erzeugt werden.

Weiterhin kann die Gesamtlichtverteilung mit der Ausgangslichtverteilung und/oder einer Markierungslichtverteilung kombiniert werden. Dadurch kann die Anzeige der Fahrwegverengung und/oder die Anzeige des richtungsweisenden Musters in der Ausgangslichtverteilung erzeugt werden, ohne dass die Charakteristik der Ausgangslichtverteilung verloren geht. Die Gesamtlichtverteilung kann gleichzeitig einen Markierungsspot umfassen, mit dem erfasste Objekte durch eine erhöhte Lichtintensität markiert werden können.

Weiterhin wird die Leuchtweite der Gesamtlichtverteilung nach oder während der Bildung des Bereichs abgesenkt. Dadurch wird vorteilhafterweise verhindert, dass andere Verkehrsteilnehmer geblendet werden.

Die Ausgangslichtverteilung kann insbesondere eine Abblendlichtverteilung, eine asymmetrische Abblendlichtverteilung, eine Stadtlichtverteilung oder eine maskierte Dauerfernlichtverteilung sein.

Handelt es sich bei der Ausgangslichtverteilung um die maskierte Dauerfernlichtverteilung, wird ein vorausfahrender und/oder entgegenkommender Verkehrsteilnehmer aus der Lichtverteilung herausgeschnitten. Ein solches maskiertes Dauerfernlicht ist beispielsweise in der DE 10 2009 054 249 A1 beschrieben, deren diesbezüglicher Inhalt durch Bezugnahme in die vorliegende Anmeldung aufgenommen wird. Bei der maskierten Dauerfernlichtverteilung entsteht ein Korridor, in dem sich ein erfasster Verkehrsteilnehmer befindet. Der erfasste Verkehrsteilnehmer wird durch die Bildung des Korridors aus der Lichtverteilung herausgeschnitten. Dadurch wird eine Blendung auch bei Erzeugung eines Fernlichts vermieden. Die maskierte Dauerfernlichtverteilung weist insbesondere insgesamt vier vertikale Hell-Dunkel-Grenzen, zwei pro Lichtbündel, auf. Dabei weist jedes Lichtbündel eine äußere und eine innere Hell-Dunkel-Grenze auf. Die innere Hell-Dunkel-Grenze befindet sich dabei direkt neben dem erfassten Verkehrsteilnehmer, während sich die äußere Hell-Dunkel-Grenze nicht direkt neben dem erfassten Verkehrsteilnehmer befindet. Der Korridor, in dem sich der erfasste Verkehrsteilnehmer befindet, wird also von den inneren vertikalen Hell-Dunkel-Grenzen und der horizontalen Hell-Dunkel-Grenze gebildet. Die L-Form für die Hell-Dunkel-Grenze jedes Lichtbündels wird ebenso von der inneren vertikalen Hell-Dunkel-Grenze und der horizontalen Hell-Dunkel-Grenze gebildet.

Zur Erzeugung der Gesamtlichtverteilung werden die verschiedenen Teilbereiche der maskierten Dauerfernlichtverteilung verwendet, so dass die Gesamtlichtverteilung Fernlichtanteile aufweisen kann. Vorteilhafterweise müssen zur Erzeugung der Gesamtlichtverteilung keine separaten Bauteile, insbesondere keine separaten Lichtmodule, in dem Scheinwerfer verbaut werden. Die Gesamtlichtverteilung kann hierdurch vorteilhafterweise auf kostengünstige und bausparende Art und Weise erzeugt werden.

Die beschriebenen Lichtverteilungen werden insbesondere von einer Scheinwerferanordnung für ein Fahrzeug erzeugt. Diese Scheinwerferanordnung umfasst einen rechten und einen linken Scheinwerfer, wobei mit dem rechten Scheinwerfer ein rechtes Lichtbündel und mit dem linken Scheinwerfer ein linkes Lichtbündel emittierbar ist. Weiterhin ist mittels des linken und des rechten Lichtbündels eine Ausgangslichtverteilung erzeugbar. Die Scheinwerferanordnung umfasst zudem ein Assistenzsystem, mittels welchem ein Signal erzeugbar ist, welches einen
Navigationshinweis für ein zukünftiges Fahrmanöver darstellt und welches mittels einer Steuervorrichtung an die Scheinwerferanordnung übermittelbar ist. In Abhängigkeit von dem Signal ist eine Gesamtlichtverteilung erzeugbar, bei der mit dem rechten und dem linken Lichtbündel Seitenbereiche bildbar sind, zwischen denen ein Bereich bildbar ist, welcher eine niedrigere Lichtintensität aufweist als die Seitenbereiche und dessen Form für den Fahrer den Navigationshinweis innerhalb der Gesamtlichtverteilung wiedergibt. Die Scheinwerferanordnung ist insbesondere dazu ausgestaltet, das erfindungsgemäße Verfahren auszuführen, und weist daher alle Vorteile des erfindungsgemäßen Verfahrens auf.

Die Assistenzsysteme umfassen dabei insbesondere ein Kamerasystem und/oder ein Navigationssystem.

Die Erfindung wird nun anhand von Ausführungsbeispielen mit Bezug zu den beigefügten Zeichnungen erläutert.
- Fig. 1: zeigt schematisch ein Ausführungsbeispiel eines Scheinwerfers einer Scheinwerferanordnung, mittels welcher das erfindungsgemäße Verfahren ausgeführt werden kann,
- Fig. 2: zeigt schematisch ein Ausführungsbeispiel der Scheinwerferanordnung,
- Fig. 3: zeigt die Abstrahlcharakteristik einer Ausgangslichtverteilung auf der Straße,
- Fig. 4: zeigt die Abstrahlcharakteristik eines weiteren Ausführungsbeispiels einer Ausgangslichtverteilung auf der Straße,
- Fig. 5: zeigt die Abstrahlcharakteristik einer ersten Ausführungsform der Gesamtlichtverteilung auf der Straße und
- Fig. 6a bis 6c: zeigen Abstrahlcharakteristiken einer zweiten Ausführungsform der Gesamtlichtverteilung auf der Straße.

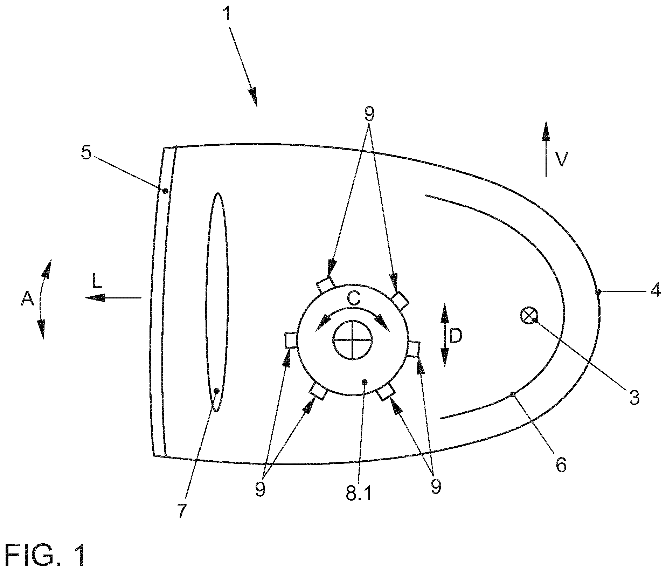

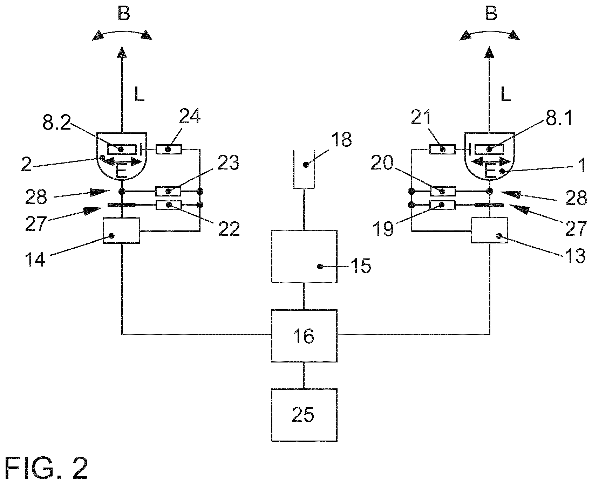

Mit Bezug zu den Figuren 1 und 2 wird ein Scheinwerfer 1 sowie eine Scheinwerferanordnung, welche einen Scheinwerfer 1 aufweist und mittels welcher das erfindungsgemäße Verfahren ausgeführt werden kann, erläutert.

Die Scheinwerferanordnung, die allgemein in Figur 2 gezeigt ist, umfasst zwei beabstandete Projektionsscheinwerfer 1 und 2, die vorne auf der rechten und linken Seite eines Fahrzeugs auf an sich bekannte Weise angeordnet sind. Einer dieser Projektionsscheinwerfer 1 ist in Fig. 1 gezeigt. Der auf der anderen Seite angeordnete linke Projektionsscheinwerfer 2 ist im Wesentlichen identisch aufgebaut.

In Figur 1 ist ein Schnitt des rechten Projektionsscheinwerfers 1 in einer Ebene dargestellt, die parallel zu der von der Fahrzeuglängsachse und der vertikalen Achse V aufgespannten Ebene ist. Der Projektionsscheinwerfer 1 umfasst auf an sich bekannte Art und Weise eine Lichtquelle 3, die von einem als Rotationsellipsoid ausgebildeten Reflektor 6 umgeben ist. Der Reflektor 6 weist somit zwei Brennpunkte auf. Die Lichtquelle 3 befindet sich in einem der Brennpunkte des Reflektors 6. Das von der Lichtquelle 3 emittierte Licht wird von dem Reflektor 6 in Lichtemissionsrichtung L des Projektionsscheinwerfers 1 in Richtung einer Projektionslinse 7 reflektiert. Eine Blendenwalze 8.1 mit den Blendenkanten 9 ist derart in dem Scheinwerfer 1 angeordnet, dass sich die Blendenkanten bei entsprechender Anordnung im Strahlengang an dem Brennpunkt der Projektionslinse 7 und nahe dem zweiten Brennpunkt des Reflektors 6 befinden. Die Lichtquelle 3, der Reflektor 6, die Linse 7 und die Blendenwalze 8.1 sind innerhalb eines Gehäuses 4 angeordnet, das von einer Lichtscheibe 5 abgeschlossen ist. Die Form der Hell-Dunkel-Grenze der Gesamtlichtverteilung des Projektionsscheinwerfers 1 lässt sich dadurch verändern, dass die Blendenwalze 8.1 gedreht wird.

Die Lichtquelle 3 kann dabei stellvertretend für eine Leuchtdiodenmatrix, eine Xenon-Lichtquelle oder sonstige bekannte Lichtquellen stehen.

Die Art und Weise, wie verschiedene Lichtverteilungen durch die Drehung der Blendenwalze 8.1 oder Verschieben der Blendenwalze 8.1 erzeugt werden können, ist beispielsweise in der DE 10 2012 022 524 A1 oder der EP 0 935 728 B1 beschrieben, deren diesbezüglicher Inhalt durch Bezugnahme in die vorliegende Anmeldung aufgenommen wird.

Mit Bezug zur Figur 2 wird im Folgenden ein Ausführungsbeispiel der Scheinwerferanordnung beschrieben, welche einen rechten Scheinwerfer 1 und einen linken Scheinwerfer 2 umfasst, wie er in Figur 1 gezeigt ist.

Der rechte Scheinwerfer 1 der Scheinwerferanordnung ist mit einem Steuergerät 14 verbunden, der linke Scheinwerfer 2 mit einem Steuergerät 13. Mittels der Steuergeräte 13 und 14 werden die Teillichtverteilungen der Scheinwerfer 1 und 2 gesteuert, welche überlagert eine Gesamtlichtverteilung ergeben.

Die Steuergeräte 13 und 14 steuern eine Leuchtweitenregulierung für die Scheinwerfer 1 und 2, bei welcher die Scheinwerfer 1 und 2 um eine horizontale Achse mittels des Aktuators 19 bzw. 22 schwenkbar sind. Die Lichtemissionsrichtung L der Scheinwerfer 1 und 2 kann auf diese Weise in Richtung des Pfeils A (Figur 1) geschwenkt werden. Ferner steuern die Steuergeräte 13 und 14 die Aktuatoren 20 bzw. 23, mit denen die Scheinwerfer 1 und 2 um eine vertikale Achse V schwenkbar sind. Mittels der Aktuatoren 20 und 23 kann die Lichtemissionsrichtung L des Scheinwerfers 1 bzw. des Scheinwerfers 2 in Richtung des Pfeils B geschwenkt werden. Die Aktuatoren 20 und 23 sind beispielsweise Teil eines bereits vorhandenen Kurvenlichts.

Das Steuergerät 13 steuert die Drehung der Blendenwalze 8.1 für den rechten Scheinwerfer 2 und das Steuergerät 14 steuert die Drehung der Blendenwalze 8.2 für den linken Scheinwerfer 1, mittels der Aktuatoren 21 bzw. 24. Die Aktuatoren 21 bzw. 24 sind mit den jeweiligen Blendenwalzen 8.1 bzw. 8.2 gekoppelt. Werden die Aktuatoren 21 bzw. 24 gedreht, drehen sich auch die Blendenwalzen 8.1 bzw. 8.2. Wird der Aktuator 21 bzw. 24 ausgehend von seiner Lage, wie sie in Figur 1 gezeigt ist, im Uhrzeigersinn gedreht, dreht sich auch die Blendenwalze 8.1 bzw. 8.2 im Uhrzeigersinn. Bei einer Drehung des Aktuators 21 bzw. 24 entgegen dem Uhrzeigersinn drehen sich auch die Blendenwalzen 8.1 bzw. 8.2 entgegen dem Uhrzeigersinn. Die Blendenwalze 8.1 bzw. 8.2 kann dabei in Abhängigkeit von der Anzahl der Blendenkanten 9 eine bestimmte Anzahl von Stellungen einnehmen. Die für die Gesamtlichtverteilung erzeugte Hell-Dunkel-Grenze ist dann abhängig von der Stellung der Blendenwalze 8.1 bzw. 8.2.

Weiterhin können die Blendenwalzen 8.1 und 8.2 durch die Aktuatoren 21 bzw. 24 im Strahlengang der Scheinwerfer 1 bzw. 2 vertikal oder horizontal verschoben werden.

Weiterhin kann die Blendenwalze 8.1 bzw. 8.2 durch die Aktuatoren 21 bzw. 24 im Strahlengang der Scheinwerfer 1 bzw. 2 in vertikaler Richtung D oder horizontaler Richtung E verschoben werden.

Des Weiteren umfasst die Scheinwerferanordnung eine Einrichtung 18 zum Erfassen eines Objekts in Fahrtrichtung vor dem Fahrzeug. Dabei kann es sich bei dem Objekt um ein statisches Objekt oder ein dynamisches Objekt handeln. Insbesondere handelt es sich bei dem Objekt nicht um ein entgegenkommendes oder vorausfahrendes Kraftfahrzeug. Ein statisches Objekt kann ein Hindernis auf der Fahrbahn, beispielsweise eine Baustellenbegrenzung, welche durch Pylonen gebildet wird, sein. Weiterhin können statische Objekte auch parkende Fahrzeuge sein, welche den Fahrweg für das Fahrzeug verengen. Fahrwegverengungen können zudem von dynamischen Objekten, beispielsweise Fahrzeugen, die langsamer fahren als das eigene Fahrzeug, erzeugt werden.

Bei der Erfassungseinrichtung 18 handelt es sich insbesondere um ein Kamerasystem mit angeschlossener Bildverarbeitungseinheit 15. Das Kamerasystem 18 kann insbesondere die Position des statischen Objekts sowie die Position und die Bewegungsrichtung eines dynamischen Objekts erfassen. Das Kamerasystem 18 umfasst dazu ein an sich bekanntes Infrarot-Nachtsichtsystem, welches andere Fahrzeuge aufgrund der Wärmeabstrahlung auch bei Dämmerung oder Dunkelheit gegenüber der kühleren Umgebung erkennen kann. Statische Objekte können beispielsweise über Mustererkennung erfasst werden. Die Bildverarbeitungseinheit 15 kann die von dem Kamerasystem 18 erfassten Bilder dahingehend analysieren, ob sich statische und/oder dynamische Objekte in dem erfassten Bildausschnitt befinden. Bei dynamischen Objekten werden die Bilddaten so ausgewertet, dass eine Prognose der voraussichtlichen Trajektorie des dynamischen Objekts möglich ist.

Zudem kann die Scheinwerferanordnung zusätzlich mit einem Navigationssystem 25 gekoppelt sein. Das Navigationssystem 25 gibt Hinweise, die zum Befahren einer gewünschten Route dienen, an die Scheinwerfer 1 und 2 weiter, die dann dementsprechend angesteuert werden.

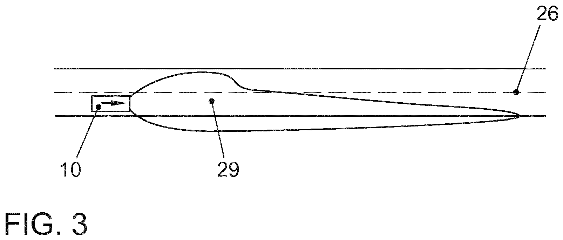

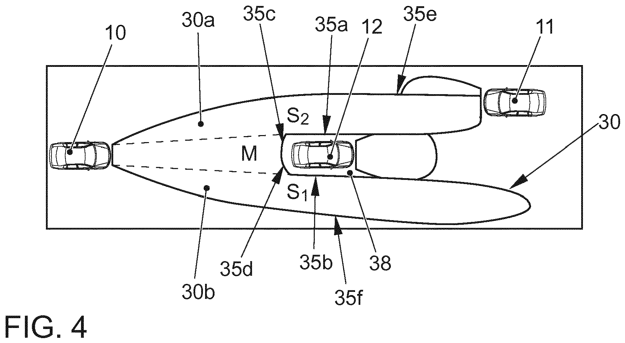

Im Folgenden werden mit Bezug zu den Figuren 3 und 4 verschiedene Ausgangslichtverteilungen beschrieben, welche von den Scheinwerfern 1 und 2 der erfindungsgemäßen Scheinwerferanordnung allgemein erzeugt werden können:
Eine von der Scheinwerferanordnung erzeugbare Ausgangslichtverteilung 29 kann eine herkömmliche Abblendlichtverteilung, wie sie in Figur 3 gezeigt ist, sein. Die von der Scheinwerferanordnung erzeugte Ausgangslichtverteilung 29 ist in Figur 3 anhand einer Hell-Dunkel-Grenze auf einer Straße gezeigt. Die Ausgangslichtverteilung 29 ist asymmetrisch hinsichtlich einer Mittelachse 26, die bei einer geraden Fahrbahn die Fahrbahn des Fahrzeugs 10, welche die Scheinwerferanordnung umfasst, von der Gegenfahrbahn abgrenzt. Die Leuchtweite im Bereich der Gegenfahrbahn ist sehr viel geringer als die Leuchtweite im Bereich der Fahrbahn und bei Rechtsverkehr auch geringer als auf der rechten Seite neben der Fahrbahn.

In Figur 4 ist ein weiteres Ausführungsbeispiel für eine Ausgangslichtverteilung 30 gezeigt, welche ein maskiertes Dauerfernlicht darstellt. Diese Ausgangslichtverteilung 30 zeichnet sich dadurch aus, dass sie in Richtung eines erfassten Verkehrsteilnehmers 12, d.h. in einem Mittelbereich M der Ausgangslichtverteilung 30, eine Leuchtweite aufweist, die so geregelt wird, dass sie zumindest geringer als der Abstand zu dem erfassten Verkehrsteilnehmer 12 ist und insbesondere bis zu dem anderen Verkehrsteilnehmer 12 reicht. Bei dem erfassten Verkehrsteilnehmer 12 handelt es sich insbesondere um ein vorausfahrendes Fahrzeug. In diesem Fall kann die Leuchtweite im Mittelbereich M der Ausgangslichtverteilung 30 beispielsweise bis zur hinteren Stoßstange des vorausfahrenden Fahrzeugs 12 reichen.

Auf zumindest einer Seite neben dem Mittelbereich M in Richtung des erfassten Verkehrsteilnehmers 12 ist ein Seitenbereich S₁ gebildet, bei dem die Leuchtweite größer ist als die Leuchtweite im Mittelbereich M der Ausgangslichtverteilung 30. Neben dem Verkehrsteilnehmer 12 wird somit vorbeigeleuchtet, um dem Fahrer des Fahrzeugs 10 eine bessere Ausleuchtung des Verkehrsbereichs vor dem Fahrzeug 10 bereitzustellen. Die Leuchtweite im Seitenbereich S₁ kann beispielsweise der Leuchtweite bei einer herkömmlichen Fernlichtfunktion entsprechen. Es wird auch auf der anderen Seite bei der Ausgangslichtverteilung 30 ein Seitenbereich S₂ gebildet, welcher auch eine größere Leuchtweite besitzt als die Leuchtweite in dem Mittelbereich M. Auch die Leuchtweite des Seitenbereichs S₂ kann der Leuchtweite einer herkömmlichen Fernlichtfunktion entsprechen, so dass die Ausgangslichtverteilung 30 einem herkömmlichen Fernlicht entsprechen kann, bei dem in der Lichtverteilung ein Bereich beim erfassten Verkehrsteilnehmer 12 und in Fahrtrichtung vor dem Verkehrsteilnehmer 12 ausgeschnitten ist. Auf diese Weise kann dem Fahrer des Fahrzeugs 10 eine optimale Ausleuchtung des Verkehrsraums bereitgestellt werden, ohne den anderen Verkehrsteilnehmer 12 zu blenden. Wird im Bereich der Ausleuchtung der Scheinwerferanordnung ein noch weiterer Verkehrsteilnehmer, wie beispielsweise ein entgegenkommendes Fahrzeug 11 erfasst, kann die Leuchtweite ferner auch in Richtung dieses Verkehrsteilnehmers 11 so geregelt werden, dass sie nur bis zu diesem Verkehrsteilnehmer 11 reicht.

In dem in Figur 4 gezeigten Fall wird die Leuchtweite im Seitenbereich S₂ der Ausgangslichtverteilung 30 kontinuierlich an den Abstand des eigenen Fahrzeugs 10 zu dem entgegenkommenden Fahrzeug 11 angepasst. Des Weiteren ist es gemäß einer anderen Ausgestaltung möglich, dass die Breite des Mittelbereichs M so gewählt wird, dass sich in dem Korridor 38 zwischen den Seitenbereichen S₁ und S₂ alle erfassten Fahrzeuge 11 und 12 befinden. Auch in diesem Fall kann jedoch die Leuchtweite für den zweiten Seitenbereich S₂ in Abhängigkeit insbesondere von der Position eines entgegenkommenden Fahrzeugs 11 geregelt werden.

Für die Regelung der Leuchtweite im Mittelbereich M und gegebenenfalls in den Seitenbereichen S₁ und S₂ wird der Steuervorrichtung 16 von der Bildverarbeitungsvorrichtung 15 kontinuierlich Daten zu anderen Fahrzeugen 11, 12 in Fahrtrichtung vor dem Fahrzeug 10 übertragen. In Abhängigkeit von der Position anderer erfasster Verkehrsteilnehmer 12 bzw. 11 überträgt die Steuervorrichtung 16 Steuersignale an die Steuergeräte 13 und 14 für die Scheinwerfer 1 und 2. Die Steuergeräte 13 und 14 steuern daraufhin die Aktuatoren 19 bis 21 für den rechten Scheinwerfer 1 und die Aktuatoren 22 bis 24 für den linken Scheinwerfer 2 so an, dass die gewünschte Ausgangslichtverteilung 30 erzeugt wird. Dabei wird die vertikale Hell-Dunkel-Grenze zum einen durch ein Verschwenken der Scheinwerfer 1 und 2 um die vertikalen Achsen und zum anderen durch Drehen der Blendenwalzen 8.1 und 8.2 mittels der Aktuatoren 21 und 24 erzeugt. Die horizontale Hell-Dunkel-Grenze im Mittelbereich M, d.h. die Leuchtweite im Mittelbereich M, wird hingegen nicht von einer Verlagerung der Blendenwalze 8 erzeugt, sondern bevorzugt ausschließlich durch die Leuchtweitenregulierung, d.h. durch ein Verschwenken der Scheinwerfer 1 und 2 um die horizontale Achse mittels der Aktuatoren 19 und 22.

Die Ausgangslichtverteilung 30 wird aus einem linken Lichtbündel 30a und einem rechten Lichtbündel 30b zusammengesetzt. Das linke Lichtbündel 30a wird dabei vom linken Scheinwerfer 2 emittiert und das rechte Lichtbündel 30b wird vom rechten Scheinwerfer 1 emittiert. Die beiden Lichtbündel 30a und 30b weisen Hell-Dunkel-Grenzen mit einer L-Form auf, die zusammengesetzt zur Ausgangslichtverteilung 30 eine U-Form bilden. Die L-Form der Hell-Dunkel-Grenze des linken Lichtbündels 30a umfasst dabei eine innere vertikale Hell-Dunkel-Grenze 35a, die sich links neben dem erfassten Verkehrsteilnehmer 12 befindet, und eine horizontale Hell-Dunkel-Grenze 35c. Die L-Form der Hell-Dunkel-Grenze des rechten Lichtbündels 30b umfasst ebenso eine innere vertikale Hell-Dunkel-Grenze 35b, die sich rechts neben dem erfassten Verkehrsteilnehmer 12 befindet, und eine horizontale Hell-Dunkel-Grenze 35d. Die äußeren Hell-Dunkel-Grenzen 35e und 35f des linken 30a bzw. rechten Lichtbündels 30b tragen nicht zur L-Form der Hell-Dunkel-Grenze bei. Die L-Formen werden insbesondere von den Hell-Dunkel-Grenzen der Seitenbereiche S₁ und S₂ sowie der Hell-Dunkel-Grenze des Mittelbereichs M gebildet, welche den Korridor 38 bilden, in dem sich der erfasste Verkehrsteilnehmer 12 befindet.

Die in Bezug auf die Hell-Dunkel-Grenze verwendeten Begriffe horizontal und vertikal beziehen sich auf die Lichtverteilung auf einem senkrecht zur Lichtemissionsrichtung L angeordneten Messschirm. Eine horizontale Hell-Dunkel-Grenze ist in diesem Fall parallel zu der Horizontalachse, die bei einem zehn Meter entfernten Schirm zehn Zentimeter unterhalb der Anbauhöhe der Scheinwerfer 1 und 2 angeordnet ist. Eine vertikale Hell-Dunkel-Grenze verläuft senkrecht zu der Horizontalachse.

Alternativ kann es sich bei der Ausgangslichtverteilung 29 auch um ein herkömmliches Stadtlicht, Basislicht oder Schlechtwetterlicht handeln. Im Stadtverkehr sind die Fahrbahnen meist gut ausgeleuchtet, während seitliche Bereiche neben der Fahrbahn weniger gut beleuchtet sind. Daher zeichnet sich eine Stadtlichtverteilung dadurch aus, dass die seitlichen Bereiche der Fahrbahn von den Scheinwerfern 1 und 2 besser ausgeleuchtet werden, als die Mitte der Fahrbahn. Dies wird beispielsweise dadurch erreicht, dass die Scheinwerfer 1 und 2 in einer auseinander geschwenkten Stellung betrieben werden. Die horizontalen Schwenkwinkel der Scheinwerfer 1 und 2 sind nicht gleich, so dass die Scheinwerfer 1 und 2 nicht parallel zueinander ausgerichtet sind.

Eine Gesamtlichtverteilung, die von dem erfindungsgemäßen Verfahren erzeugt wird, zeichnet sich dadurch aus, dass in der Gesamtlichtverteilung für den Fahrer ein Navigationshinweis für ein zukünftiges Fahrmanöver erzeugt wird. Dadurch wird dem Fahrer eine vorausschauende Fahrzeugführung ermöglicht. Zudem werden dem Fahrer Entscheidungen dazu erleichtert, ob er Fahrmanöver überhaupt ausführen will. Eine Gesamtlichtverteilung setzt sich dabei insbesondere aus den Teilbereichen S₁ und S₂ der Ausgangslichtverteilung 30 zusammen, auch wenn diese nicht als Ausgangslichtverteilung erzeugt wird. Zudem kann auch der Mittelbereich M der Ausgangslichtverteilung 30 zum Erzeugen einer erfindungsgemäßen Gesamtlichtverteilung verwendet werden.

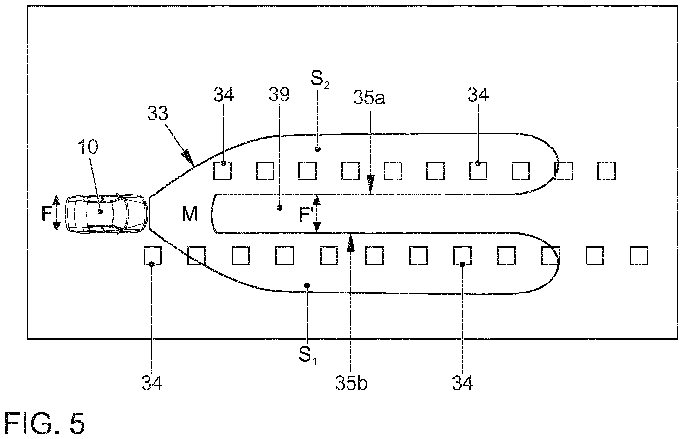

Mit Bezug zu Figur 5 wird ein erstes Ausführungsbeispiel der durch das erfindungsgemäße Verfahren erzeugten Gesamtlichtverteilung 33 erläutert.

Bei der Gesamtlichtverteilung 33 handelt es sich um eine Assistenzlichtverteilung, welche den Fahrer des Fahrzeugs 10 bei dem Fahrmanöver einer Passage durch eine Fahrwegverengung unterstützt. Dies wird dadurch erreicht, dass mittels der Gesamtlichtverteilung 33 die Breite F des Fahrzeugs 10 angezeigt wird. Die Anzeige der Breite F des Fahrzeugs 10 durch die Gesamtlichtverteilung 33 soll den Fahrer des Fahrzeugs 10 bei der Querführung des Fahrzeugs 10 bei der Durchfahrt von Engstellen, im fließenden Verkehr beim Durchfahren von Engstellen oder der Vorbeifahrt an Fahrzeugkolonnen in Nachbarfahrspuren, an stehenden Hindernissen oder parkenden Fahrzeugen unterstützen.

In Figur 5 ist eine Verkehrssituation gezeigt, bei welcher der Fahrweg durch statische Objekte 34, welche beispielsweise Pylonen oder parkende Fahrzeuge sind, verengt wird. Dabei können die Objekte 34 den Fahrweg beidseitig, wie in Figur 5 gezeigt, oder einseitig (nicht gezeigt) begrenzen.

Bei der Gesamtlichtverteilung 33 sind die beiden Lichtbündel 30a und 30b derart ausgerichtet, dass Seitenbereiche S₁ und S₂ gebildet werden. Zwischen den beiden Seitenbereichen S₁ und S₂ wird ein Bereich 39 gebildet wird, dessen Lichtintensität geringer ist als die Lichtintensität der Seitenbereiche S₁ und S₂. Der Bereich 39 weist dabei die Breite F des Fahrzeugs 10 auf.

Dadurch entsteht in der Gesamtlichtverteilung 33 ein lichtarmer Korridor 39, mit einer Breite F', die der Breite F des Fahrzeugs 10 entspricht. Dadurch wird dem Fahrer direkt vor dem Fahrzeug 10 auf der Fahrbahn angezeigt, wie breit sein Fahrzeug 10 ist. Der Fahrer kann dann besser einschätzen, ob er in die Engstelle mit seinem Fahrzeug 10 einfahren kann.

Im Folgenden wird ein erstes Ausführungsbeispiel des erfindungsgemäßen Verfahrens erläutert, mit welchem die Gesamtlichtverteilung 33 erzeugt wird.

Als Ausgangslichtverteilung wird dabei die asymmetrische Abblendlichtverteilung 29 erzeugt.

Zunächst werden die Objekte 34 von dem Kamerasystem 18 erfasst. Dabei werden die Objekte 34 zudem als Fahrwegverengung erkannt.

Es wird dann die Breite F des Fahrzeugs 10 ermittelt. Die Breite F des Fahrzeugs 10 ist beispielsweise in einem internen Speicher des Fahrzeugs 10 unter Fahrzeugdaten abgespeichert. Weiterhin wird ein Signal an die Scheinwerfer 1 und 2 übermittelt, mittels welchem die Blendenwalzen 8.1 und 8.2 und die Schwenkwinkel der Scheinwerfer 1 und 2 entsprechend der Breite F des Fahrzeugs 10 eingestellt werden.

Dabei werden im rechten 1 und im linken Scheinwerfer 2 die Blendenwalzen 8.1 und 8.2 derart verstellt, dass die Seitenbereiche S₁ und S₂ erzeugt werden. Es werden also die entsprechenden Blendenkanten 9 in den Strahlengang gedreht, wie dies auch bei der Erzeugung der Ausgangslichtverteilung 30 geschehen würde. Zudem wird der Mittelbereich M erzeugt, um eine Ausleuchtung des Nahfelds direkt vor dem Fahrzeug 10 zu gewährleisten.

Weiterhin werden die Blendenwalzen 8.1 und 8.2 in Abhängigkeit von der Breite F des Fahrzeugs 10 auseinander bzw. zueinander geschoben. Ist der Bereich 39 bei der Erzeugung der Gesamtlichtverteilung 33 breiter als das Fahrzeug 10, werden die Blendenwalzen 8.1 bzw. 8.2 solange in horizontaler Richtung E zueinander geschoben, bis die Breite F' des Bereichs 39 die Breite F des Fahrzeugs 10 aufweist. Weist der Bereich 39 bei der Erzeugung der Gesamtlichtverteilung 33 eine Breite F' auf, die geringer ist als die Breite F des Fahrzeugs 10, werden die Blendenwalzen 8.1 und 8.2 solange in horizontaler Richtung E auseinander geschoben, bis der Bereich 39 die Breite F des Fahrzeugs 10 aufweist.

Die Lichtemissionsrichtungen der beiden Scheinwerfer 1 und 2 werden zudem parallel zueinander ausgerichtet.

Um zu vermeiden, dass andere Verkehrsteilnehmer von der entstandenen Gesamtlichtverteilung 33 geblendet werden, wird die Leuchtweite der Gesamtlichtverteilung 33 während oder nach der Bildung des Bereichs 39 abgesenkt. Dies wird durch ein Verschwenken der Scheinwerfer 1 und 2 in Richtung A nach unten erreicht. Um zudem zu vermeiden, dass für den Fahrer der Eindruck entsteht, als führe er in ein dunkles Loch hinein, kann die Absenkung der Scheinwerfer 1 und 2 gering ausfallen, beispielsweise um 1°. Zudem kann die Erzeugung des lichtarmen Korridors nur kurzzeitig erfolgen, um dem Fahrer die Breite F des Fahrzeugs 10 bei der Einfahrt in die Fahrwegverengung anzuzeigen. Es wird dadurch jedoch auch vermieden, dass der Fahrer in der Fahrwegverengung Hindernisse übersieht.

Durch den lichtarmen Korridor 39 wird dem Fahrer ein Fahrschlauch auf der Fahrbahn angezeigt, welcher es ihm erleichtert, die seitlichen Abstände in Engstellen besser einzuschätzen. Der Fahrer wird durch die Anzeige des lichtarmen Korridors 39 bei dem Fahrmanöver der Passage der Fahrwegverengung unterstützt.

Weiterhin kann zusätzlich die Richtung einer Lenkbewegung erfasst werden.

Die Lichtemissionsrichtungen L der Scheinwerfer 1 und 2 werden dann in die erfasste Richtung der Lenkbewegung horizontal um die vertikale Achse V verschwenkt. Wird also eine Lenkbewegung nach rechts erfasst, werden die Lichtemissionsrichtungen der Scheinwerfer 1 und 2 um den gleichen Schwenkwinkel nach rechts verschwenkt, so dass die Lichtemissionsrichtungen L der Scheinwerfer 1 und 2 auch nach dem Verschwenken parallel zueinander ausgerichtet sind. Bei einer erfassten Lenkbewegung nach links werden die Lichtemissionsrichtungen L der Scheinwerfer 1 und 2 dementsprechend horizontal nach links verschwenkt.

Dadurch wird dem Fahrer eine Vorausschau des Fahrschlauchs direkt auf der Fahrbahn angezeigt.

Alternativ kann an Stelle der Breite F des Fahrzeugs die Breite der Fahrwegverengung ermittelt werden. Die Ermittlung der Breite der Fahrwegverengung kann insbesondere dann erfolgen, wenn es sich um eine beidseitige Fahrwegverengung handelt.

Die Breite F' des lichtarmen Korridors wird dann an die Breite der Fahrwegverengung angepasst.

Zudem können sowohl die Breite F des Fahrzeugs 10 als auch die Breite der Fahrwegverengung ermittelt werden. Ist die Fahrwegverengung breiter als das Fahrzeug 10, werden die Scheinwerfer 1 und 2 derart angesteuert, dass die Gesamtlichtverteilung 33 einen lichtarmen Korridor 39 in der Breite F des Fahrzeugs 10 aufweist. Weiterhin sind das rechte 30b und das linke Lichtbündel 30a seitlich an der Stelle abgeschnitten, an welcher die Objekte 34 beginnen. Dadurch entstehen in der Gesamtlichtverteilung 33 links und rechts Lichtstreifen mit einer Breite, die die Differenz der Breite des Fahrzeugs 10 mit der Breite der Fahrwegverengung anzeigen. Entstehen solche Streifen nicht, ist dies ein Anzeichen dafür, dass die Fahrwegverengung breiter als das Fahrzeug 10 ist. Diese Art der Gesamtlichtverteilung 33 wird nur kurz vor Einfahrt in die Fahrwegverengung erzeugt, um zu vermeiden, dass für längere Zeit eine Gesamtlichtverteilung erzeugt wird, die nur wenig Ausleuchtung der Fahrbahn bietet.

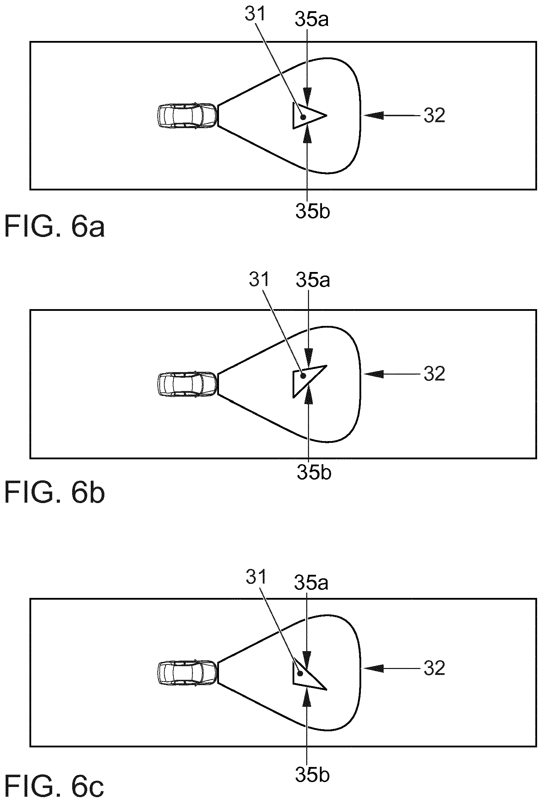

Mit Bezug zu den Figuren 6a bis 6c wird ein zweites Ausführungsbeispiel des erfindungsgemäßen Verfahrens erläutert, mit welchem eine zweite Ausführungsform der Gesamtlichtverteilung 32 erzeugt wird.

Dabei ist die Gesamtlichtverteilung 32 als Hell-Dunkel-Grenze auf einer Fahrbahn dargestellt.

Bei der Gesamtlichtverteilung 32 handelt es sich, wie bei der Gesamtlichtverteilung 33, um eine Assistenzlichtverteilung. Bei dieser Gesamtlichtverteilung wird der Fahrer allerdings dadurch unterstützt, dass Anweisungen des Navigationssystems als Hinweis für den Fahrer in der Gesamtlichtverteilung 32 erzeugt werden.

Als Ausgangslichtverteilung wird dabei wiederum die asymmetrische Abblendlichtverteilung 29 erzeugt.

Das Navigationssystem 25, welches eine gewünschte zu befahrene Route ermittelt hat, gibt dabei Richtungsanweisungen an den Fahrer, welche zur Einhaltung der gewünschten Route dienen.

Das von dem Navigationssystem 25 erzeugte Signal zur Anzeige der Richtungsanweisung innerhalb des Fahrzeugs 10 wird dabei auch an die Steuervorrichtung 16 der Scheinwerferanordnung übermittelt.

Bei einer Richtungsanweisung geradeaus werden die Scheinwerfer 1 und 2 dann wie folgt angesteuert:
Es werden im rechten 1 und im linken Scheinwerfer 2 die Blendenwalzen 8.1 und 8.2 derart verstellt, dass die vertikalen Hell-Dunkel-Grenzen 35a und 35b und die horizontalen Hell-Dunkel-Grenzen 35c und 35d erzeugt werden. Es werden also die entsprechenden Blendenkanten 9 in den Strahlengang gedreht, wie dies auch bei der Erzeugung der Ausgangslichtverteilung 30 geschehen würde. Dadurch wird zunächst ein lichtarmer Korridor wie im Ausführungsbeispiel der Gesamtlichtverteilung 33 gebildet. Um ein richtungsweisendes Muster 31 zu erhalten, wie in Figur 6a gezeigt, werden die Lichtemissionsrichtungen L der Scheinwerfer 1 und 2 ausgehend von einer parallelen Ausrichtung der Lichtemissionsrichtungen L der Scheinwerfer 1 und 2, um den gleichen Winkel horizontal aufeinander zu geschwenkt. Der linke Scheinwerfer 2 wird also nach rechts und der rechte Scheinwerfer 1 wird nach links geschwenkt. Dadurch treffen sich die vertikalen Hell-Dunkel-Grenzen 35a und 35b in einem gewissen Abstand, beispielsweise in einem Abstand von etwa 40 m, vor dem Fahrzeug 10. In der Gesamtlichtverteilung 32 entsteht dadurch das richtungsweisende Muster 31, welches eine Pfeilspitze darstellt, die geradeaus zeigt. Dabei werden die Lichtemissionsrichtungen L beider Scheinwerfer 1 und 2 um einen Winkel von zwischen 1° und 4° nach innen geschwenkt.

Durch die Größe des Schwenkwinkels kann die Länge der Pfeilspitze eingestellt werden. Insbesondere werden beide Scheinwerfer um einen Winkel von 1,5° nach innen geschwenkt.

Dem Fahrer wird daher in der Gesamtlichtverteilung 32 direkt auf der Fahrbahn eine Richtungsanweisung gegeben. Der Fahrer muss den Blick nicht von der Fahrbahn nehmen, um die Richtungsanweisung wahrzunehmen.

Wird ein Signal für eine Richtungsanweisung nach links an die Scheinwerferanordnung übermittelt, werden die horizontalen Schwenkwinkel derart gewählt, dass das richtungsweisende Muster 31 nach links zeigt, wie in Figur 6b gezeigt ist. Es wird wieder von einer parallelen Ausrichtung der Scheinwerfer 1 und 2 zueinander ausgegangen. Es wird dann der linke Scheinwerfer 2 nach links geschwenkt. Der rechte Scheinwerfer 1 wird ebenso nach links verschwenkt. Durch die Ausnutzung der maximalen Schwenkwinkel nach innen und nach außen kann die Pfeilspitze um bis zu einem Wert von beispielsweise 10° auf der Fahrbahn nach links zeigen. Bei höheren maximal möglichen Schwenkwinkeln, kann die Pfeilspitze auch um einen höheren Winkelbetrag nach links zeigen. Dabei muss jedoch darauf geachtet werden, dass die Pfeilspitze noch als solche zu erkennen ist.

Wird ein Signal für eine Richtungsanweisung nach rechts an die Scheinwerferanordnung übermittelt, werden die horizontalen Schwenkwinkel derart gewählt, dass das richtungsweisende Muster 31 nach rechts zeigt, wie in Figur 6c gezeigt ist. Es wird wieder von einer parallelen Ausrichtung der Scheinwerfer 1 und 2 zueinander ausgegangen. Es wird dann der linke Scheinwerfer 2 nach rechts geschwenkt. Der rechte Scheinwerfer 1 wird ebenso nach rechts verschwenkt. Durch die Ausnutzung der maximalen Schwenkwinkel nach innen und nach außen kann die Pfeilspitze um bis zu einem Wert von beispielsweise 10° auf der Fahrbahn nach rechts zeigen. Bei höheren maximal möglichen Schwenkwinkeln, kann die Pfeilspitze auch um einen höheren Winkelbetrag nach rechts zeigen.

Um zu vermeiden, dass andere Verkehrsteilnehmer von der entstandenen Gesamtlichtverteilung 32 geblendet werden, wird die Leuchtweite der Gesamtlichtverteilung 32 während oder nach der Bildung des Bereichs 31 abgesenkt. Dies wird durch ein Verschwenken der Scheinwerfer 1 und 2 in Richtung A nach unten erreicht.

Die erste und die zweite Ausführungsform des erfindungsgemäßen Verfahrens unterschieden sich insbesondere dadurch, dass zur Erzeugung der Gesamtlichtverteilung 33 die Schweinwerfer 1 und 2 parallel zueinander ausgerichtet werden, während zur Erzeugung der Gesamtlichtverteilung 32 die Schwenkwinkel der Scheinwerfer 1 und 2 derart gewählt werden, dass ein richtungsweisendes Muster 31 gebildet wird. Bei der zweiten Ausführungsform werden insbesondere die Scheinwerfer nicht parallel zueinander ausgerichtet.

Die Gesamtlichtverteilungen 32 und 33 können zudem mit einer Markierungslichtverteilung kombiniert werden. Es ist dann auch möglich eine zweite Gesamtlichtverteilung zu erzeugen, bei der das richtungsweisende Muster 31 auf ein zu markierendes Objekt zeigt.

Hierzu wird ein dynamisches Objekt, beispielsweise ein Fußgänger, der sich auf dem Gehsteig befindet oder der die Fahrbahn überqueren möchte erfasst. Es wird dann das richtungsweisende Muster 31 erzeugt, welches auf das Objekt zeigt. Zudem wird oberhalb des richtungsweisenden Musters 31 dann ein Lichtspot erzeugt, der das Objekt markiert. Dadurch wird der Fußgänger für den Fahrer besser sichtbar gemacht. Zudem kann das richtungsweisende Muster 31 dem Fußgänger folgen, so dass die Pfeilspitze dem Objekt folgt. Es wird dann entsprechend auch der Markierungsspot dem Objekt nachgeführt.

Wird das maskierte Dauerfernlicht in beiden Ausführungsbeispielen als Ausgangslichtverteilung verwendet, kann der Schritt der L-Form-Erzeugung entfallen, da die Lichtbündel diese Form dann bereits aufweisen.

### Bezugszeichenliste

- 1: rechter Scheinwerfer
- 2: linker Scheinwerfer
- 3: Lichtquelle
- 4: Gehäuse
- 5: Lichtscheibe
- 6: Reflektor
- 7: Projektionslinse
- 8: Blendenwalze
- 8.1, 8.2: rechte Blendenwalze, linke Blendenwalze
- 9: Blendenkante
- 10: Fahrzeug mit der Scheinwerferanordnung
- 11: entgegenkommendes Fahrzeug
- 12: vorausfahrendes Fahrzeug
- 13: Steuergerät für den rechten Scheinwerfer
- 14: Steuergerät für den linken Scheinwerfer
- 15: Bildverarbeitungsvorrichtung
- 16: Steuervorrichtung
- 18: Erfassungseinrichtung; Kamera
- 19: erster Aktuator für den rechten Scheinwerfer
- 20: zweiter Aktuator für den rechten Scheinwerfer
- 21: dritter Aktuator für den rechten Scheinwerfer
- 22: erster Aktuator für den linken Scheinwerfer
- 23: zweiter Aktuator für den linken Scheinwerfer
- 24: dritter Aktuator für den linken Scheinwerfer
- 25: Navigationssystem
- 26: Mittelachse
- 29: Ausgangslichtverteilung/ Abblendlicht
- 30: Ausgangslichtverteilung/ maskiertes Dauerfernlicht
- 31: Bereich; richtungsweisendes Muster
- 32: Gesamtlichtverteilung
- 33: Gesamtlichtverteilung
- 34: Objekt
- 35a: innere vertikale Hell-Dunkel-Grenze linkes Lichtbündel
- 35b: innere vertikale Hell-Dunkel-Grenze rechtes Lichtbündel
- 35c: horizontale Hell-Dunkel-Grenze linkes Lichtbündel
- 35d: horizontale Hell-Dunkel-Grenze rechtes Lichtbündel
- 35e: äußere vertikale Hell-Dunkel-Grenze des linken Lichtbündels
- 35f: äußere vertikale Hell-Dunkel-Grenze des rechten Lichtbündels
- 38: lichtarmer Korridor
- 39: Bereich der Gesamtlichtverteilung 33
- L: Lichtemissionsrichtung
- V: vertikale Achse
- A, B: Schwenkrichtungen der Scheinwerfer
- S₁, S₂: Seitenbereiche
- M: Mittelbereich
- F: Breite des Fahrzeugs
- F': Breite des lichtarmen Korridors
- C: Rotationsrichtung der Blendenwalze
- D, E: Verschieberichtung der Blendenwalze

## Patentansprüche

1. Verfahren zum Steuern einer Scheinwerferanordnung für ein Fahrzeug (10), wobei die Scheinwerferanordnung einen rechten Scheinwerfer (1) und einen linken Scheinwerfer (2) aufweist, wobei der rechte Scheinwerfer (1) ein rechtes Lichtbündel (30b) und der linke Scheinwerfer (2) ein linkes Lichtbündel (30a) emittiert, bei dem mittels des linken (30a) und des rechten Lichtbündels (30b) eine herkömmliche Ausgangslichtverteilung (29, 30) erzeugt wird,
**dadurch gekennzeichnet, dass**
von einem Assistenzsystem (18, 25) des Fahrzeugs (10) ein Signal erzeugt wird, welches einen Navigationshinweis für ein zukünftiges Fahrmanöver an die Scheinwerferanordnung (1, 2) übermittelt, und
in Abhängigkeit von dem Signal eine Gesamtlichtverteilung (32, 33) erzeugt wird, bei der mit dem rechten Lichtbündel (30b) und dem linken Lichtbündel (30a) Seitenbereiche (S₁, S₂) gebildet werden, zwischen denen ein Bereich (39) gebildet wird, welcher eine niedrigere Lichtintensität aufweist als die Seitenbereiche (S₁, S₂), und dessen Form für den Fahrer den Navigationshinweis innerhalb der Gesamtlichtverteilung (32, 33) wiedergibt, und in der Gesamtlichtverteilung zwischen den Seitenbereichen (S₁, S₂) ein Mittelbereich (M) zum Ausleuchten des Nahfelds direkt vor dem Fahrzeug gebildet wird, der im Wesentlichen die gleiche Lichtintensität aufweist wie die Seitenbereiche (S₁, S₂), wobei der Bereich (39) durch die Bildung des Mittelbereichs (M) eine im Wesentliche horizontale Hell-Dunkel-Grenze aufweist.

2. Verfahren nach Anspruch 1,
**dadurch gekennzeichnet, dass**
das linke (30a) und das rechte Lichtbündel (30b) zum Erzeugen der Gesamtlichtverteilung (32, 33) eine im Wesentlichen vertikale Hell-Dunkel-Grenze (35a, 35b) umfassen, wobei zum Erzeugen des Bereichs (39) in der Gesamtlichtverteilung (32, 33) die vertikale Hell-Dunkel-Grenze (35a) des linken Lichtbündels (30a) links von der vertikalen Hell-Dunkel-Grenze (35b) des rechten Lichtbündels (30b) liegt.

3. Verfahren nach einem der Ansprüche 1 oder 2,
**dadurch gekennzeichnet, dass**
zumindest ein Objekt (34) in Fahrtrichtung vor dem Fahrzeug (10) erfasst wird, wobei das Objekt (34) Teil einer Fahrwegverengung ist,
die Breite (F) des Fahrzeugs (10) ermittelt wird,
der Navigationshinweis den Fahrer beim Einfahren in die Fahrwegverengung unterstützt, und
zum Erzeugen der Gesamtlichtverteilung (33) die vertikalen Hell-Dunkel-Grenzen (35a, 35b) der Lichtbündel (30a, 30b) derart ausgerichtet werden, dass der Bereich (39) als Navigationshinweis einen Korridor (38) mit geringerer Lichtintensität als die Seitenbereiche (S₁, S₂) im Wesentlichen mit der Breite (F) des Fahrzeugs (10) umfasst.

4. Verfahren nach einem der Ansprüche 2 oder 3,
**dadurch gekennzeichnet, dass**
die vertikalen Hell-Dunkel-Grenzen (35a, 35b) dadurch ausgerichtet werden, dass die horizontalen Schwenkwinkel der Scheinwerfer (1, 2) gleich sind, so dass die Lichtemissionsrichtungen (L) der Scheinwerfer (1, 2) parallel zueinander ausgerichtet werden.

5. Verfahren nach einem der Ansprüche 2 oder 3,
**dadurch gekennzeichnet, dass**
im Strahlengang der Scheinwerfer (1, 2) verschiebbare mechanische Elemente (8.1, 8.2) angeordnet sind, welche die Hell-Dunkel-Grenzen der Lichtbündel (30a, 30b) erzeugen, und
die vertikalen Hell-Dunkel-Grenzen (35a, 35b) durch Verschieben der mechanischen Elemente (8.1, 8.2) ausgerichtet werden.

6. Verfahren nach einem der vorhergehenden Ansprüche,
**dadurch gekennzeichnet, dass**
eine Lenkbewegung erfasst wird, wobei die Richtung der Lenkbewegung ermittelt wird, die Lichtemissionsrichtungen (L) der beiden Scheinwerfer (1, 2) in Richtung der Lenkbewegung um eine vertikale Achse (V) derart verschwenkt werden, dass der Winkel, um den die Lichtemissionsrichtungen (L) der Scheinwerfer (1, 2) um die vertikale Achse (V) verschwenkt werden, nach dem Verschwenken im Wesentlichen gleich ist, so dass die Lichtemissionsrichtungen (L) der Scheinwerfer (1, 2) parallel zueinander ausgerichtet sind.

7. Verfahren nach Anspruch 1 oder 2,
**dadurch gekennzeichnet, dass**
der Navigationshinweis eine Richtungsanweisung zum Einhalten einer gewünschten Route umfasst, und
zum Erzeugen der Gesamtlichtverteilung (32) die vertikalen Hell-Dunkel-Grenzen (35a, 35b) der Lichtbündel (30a, 30b) derart ausgerichtet werden, dass der Bereich (39) auf der Fahrbahn ein richtungsweisendes Muster (31) bildet, wobei die vertikalen Hell-Dunkel-Grenzen (35a, 35b) durch Schwenken der Lichtemissionsrichtungen (L) der beiden Scheinwerfer (1, 2) um eine vertikale Achse (V) ausgerichtet werden.

8. Verfahren nach Anspruch 7,
**dadurch gekennzeichnet, dass**
für eine Richtungsanweisung geradeaus die Lichtemissionsrichtungen (L) der Scheinwerfer (1, 2) um die vertikale Achse (V) ausgehend von einer parallelen Ausrichtung der Scheinwerfer (1, 2) zueinander um den gleichen Winkelbetrag aufeinander zu verschwenkt werden.

9. Verfahren nach Anspruch 7 oder 8,
**dadurch gekennzeichnet, dass**
für eine Richtungsanweisung nach rechts zumindest die Lichtemissionsrichtung (L) des linken Scheinwerfers (2) um die vertikale Achse (V) nach rechts verschwenkt wird und/oder für eine Richtungsanweisung nach links zumindest die Lichtemissionsrichtung (L) des rechten Scheinwerfers (1) um die vertikale Achse (V) nach links verschwenkt wird.

10. Verfahren nach Anspruch 9,
**dadurch gekennzeichnet, dass**
für die Richtungsanweisung nach rechts zusätzlich die Lichtemissionsrichtung (L) des rechten Scheinwerfers (1) um die vertikale Achse (V) nach rechts verschwenkt wird und/oder für die Richtungsanweisung nach links zusätzlich die Lichtemissionsrichtung (L) des linken Scheinwerfers (2) um die vertikale Achse (V) nach links verschwenkt wird.

11. Verfahren nach einem der vorhergehenden Ansprüche,
**dadurch gekennzeichnet, dass**
die Gesamtlichtverteilung (32, 33) mit der Ausgangslichtverteilung (29, 30) und/oder einer Markierungslichtverteilung kombiniert wird.

12. Verfahren nach einem der vorhergehenden Ansprüche,
**dadurch gekennzeichnet, dass**
die Leuchtweite der Gesamtlichtverteilung (32, 33) nach oder während der Bildung des Bereichs (39) abgesenkt wird.

13. Verfahren einem der vorhergehenden Ansprüche,
**dadurch gekennzeichnet, dass**
die Ausgangslichtverteilung eine Abblendlichtverteilung (29), eine asymmetrische Abblendlichtverteilung (29), eine Stadtlichtverteilung oder eine maskierte Dauerfernlichtverteilung (30) ist.

## Claims

1. Method for controlling a headlight arrangement for a vehicle (10), wherein the headlight arrangement has a right-hand headlight (1) and a left-hand headlight (2), wherein the right-hand headlight (1) emits a right-hand light beam (30b) and the left-hand headlight (2) emits a left-hand light beam (30a), in which
a conventional output light distribution (29, 30) is generated by way of the left-hand light beam (30a) and of the right-hand light beam (30b),
**characterized in that**
a signal is generated by an assistance system (18, 25) of the vehicle (10), which signal transmits a navigation instruction for a future vehicle manoeuvre to the headlight arrangement (1, 2), and
depending on the signal, an overall light distribution (32, 33) is generated in which side regions (S₁, S₂) are formed by the right-hand light beam (30b) and the left-hand light beam (30a), between which side regions a region (39) is formed that has a lower light intensity than the side regions (S₁, S₂) and whose form reproduces the navigation instruction within the overall light distribution (32, 33) for the driver, and a centre region (M) for illuminating the near field directly in front of the vehicle is formed in the overall light distribution between the side regions (S₁, S₂), which centre region has substantially the same light intensity as the side regions (S₁, S₂), wherein the region (39) has a substantially horizontal light-dark cutoff as a result of the formation of the centre region (M).

2. Method according to Claim 1,
**characterized in that**
the left-hand light beam (30a) and the right-hand light beam (30b) for generating the overall light distribution (32, 33) comprise a substantially vertical light-dark cutoff (35a, 35b), wherein, to generate the region (39) in the overall light distribution (32, 33), the vertical light-dark cutoff (35a) of the left-hand light beam (30a) lies to the left of the vertical light-dark cutoff (35b) of the right-hand light beam (30b).

3. Method according to either of Claims 1 and 2, **characterized in that**
at least one object (34) is detected in the direction of travel in front of the vehicle (10), wherein the object (34) is part of a road narrowing,
the width (F) of the vehicle (10) is determined,
the navigation instruction assists the driver when driving into the road narrowing, and
to generate the overall light distribution (33), the vertical light-dark cutoffs (35a, 35b) of the light beams (30a, 30b) are aligned such that the region (39) comprises, as navigation instruction, a corridor (38) having lower light intensity than the side regions (S₁, S₂) and that is substantially the width (F) of the vehicle (10).

4. Method according to either of Claims 2 and 3, **characterized in that**
the vertical light-dark cutoffs (35a, 35b) are aligned by the horizontal pivot angles of the headlights (1, 2) being the same, such that the light emission directions (L) of the headlights (1, 2) are aligned parallel to one another.

5. Method according to either of Claims 2 and 3, **characterized in that**
movable mechanical elements (8.1, 8.2) are arranged in the beam path of the headlights (1, 2) and generate the light-dark cutoffs of the light beams (30a, 30b), and the vertical light-dark cutoffs (35a, 35b) are aligned by moving the mechanical elements (8.1, 8.2).

6. Method according to one of the preceding claims, **characterized in that**
a steering movement is detected, wherein the direction of the steering movement is determined, the light emission directions (L) of the two headlights (1, 2) are pivoted in the direction of the steering movement about a vertical axis (V) such that the angle by which the light emission directions (L) of the headlights (1, 2) are pivoted about the vertical axis (V) is substantially the same following the pivoting, such that the light emission directions (L) of the headlights (1, 2) are aligned parallel to one another.

7. Method according to Claim 1 or 2,
**characterized in that**
the navigation instruction comprises a direction indication for staying on a desired route, and
to generate the overall light distribution (32), the vertical light-dark cutoffs (35a, 35b) of the light beams (30a, 30b) are aligned such that the region (39) forms a pattern (31) indicating a direction on the road, wherein the vertical light-dark cutoffs (35a, 35b) are aligned by pivoting the light emission directions (L) of the two headlights (1, 2) about a vertical axis (V).

8. Method according to Claim 7,
**characterized in that,**
to indicate a direction straight ahead, the light emission directions (L) of the headlights (1, 2) are pivoted about the vertical axis (V) starting from a parallel alignment of the headlights (1, 2), with respect to one another, towards one another by the same angle.

9. Method according to Claim 7 or 8,
**characterized in that,**
to indicate a direction to the right, at least the light emission direction (L) of the left-hand headlight (2) is pivoted to the right about the vertical axis (V) and/or, to indicate a direction to the left, at least the light emission direction (L) of the right-hand headlight (1) is pivoted to the left about the vertical axis (V).

10. Method according to Claim 9,
**characterized in that,**
to indicate a direction to the right, the light emission direction (L) of the right-hand headlight (1) is additionally pivoted to the right about the vertical axis (V) and/or, to indicate a direction to the left, the light emission direction (L) of the left-hand headlight (2) is additionally pivoted to the left about the vertical axis (V).

11. Method according to one of the preceding claims, **characterized in that**
the overall light distribution (32, 33) is combined with the output light distribution (29, 30) and/or a marker light distribution.

12. Method according to one of the preceding claims, **characterized in that**
the luminous width of the overall light distribution (32, 33) is reduced after or during the formation of the region (39) .

13. Method according to one of the preceding claims, **characterized in that**
the output light distribution is a low-beam light distribution (29), an asymmetric low-beam light distribution (29), a town light distribution or a masked high-beam distribution (30).

## Revendications

1. Procédé de commande d'un arrangement de phare pour un véhicule (10), l'arrangement de phare possédant un phare de droite (1) et un phare de gauche (2), le phare de droite (1) émettant un faisceau lumineux de droite (30b) et le phare de gauche (2) émettant un faisceau lumineux de gauche (30a), procédé selon lequel une distribution lumineuse initiale (29, 30) usuelle est produite au moyen du faisceau lumineux de gauche (30a) et de droite (30b),
**caractérisé en ce que**
un signal est généré par un système d'assistance (18, 25) du véhicule (10), lequel communique à l'arrangement de phare (1, 2) une consigne de navigation pour une future manoeuvre de conduite, et
une distribution lumineuse totale (32, 33) est produite en fonction du signal, avec laquelle des zones latérales (S₁, S₂) sont formées avec le faisceau lumineux de droite (30b) et le faisceau lumineux de gauche (30a), entre lesquelles est formée une zone (39) qui présente une intensité lumineuse plus faible que les zones latérales (S₁, S₂) et dont la forme restitue pour le conducteur la consigne de navigation à l'intérieur de la distribution lumineuse totale (32, 33), et
une zone centrale (M) destinée à éclairer le champ proche directement devant le véhicule est formée dans la distribution lumineuse totale entre les zones latérales (S₁, S₂), laquelle présente sensiblement la même intensité lumineuse que les zones latérales (S₁, S₂), la zone (39) présentant, du fait de la formation de la zone centrale (M), une limite clair-sombre sensiblement horizontale.

2. Procédé selon la revendication 1, **caractérisé en ce que** les faisceaux lumineux de gauche (30a) et de droite (30b) comportent, pour produire la distribution lumineuse totale (32, 33), une limite clair-sombre (35a, 35b) sensiblement verticale, la limite clair-sombre (35a) verticale du faisceau lumineux de gauche (30a) se trouvant à gauche de la limite clair-sombre (35b) verticale du faisceau lumineux de droite (30b) en vue de produire la zone (39) dans la distribution lumineuse totale (32, 33).

3. Procédé selon l'une des revendications 1 ou 2, **caractérisé en ce qu'**au moins un objet (34) est détecté dans le sens de déplacement devant le véhicule (10), l'objet (34) faisant partie d'un rétrécissement de la voie de circulation, la largeur (F) du véhicule (10) est déterminée, la consigne de navigation assiste le conducteur lors de l'entrée dans le rétrécissement de la voie de circulation, et en vue de produire la distribution lumineuse totale (33), les limites clair-sombre (35a, 35b) verticales des faisceaux lumineux (30a, 30b) sont orientées de telle sorte que la zone (39) comprend en tant que consigne de navigation un corridor (38) ayant une intensité lumineuse plus faible que les zones latérales (S₁, S₂), ayant sensiblement la largeur (F) du véhicule (10).

4. Procédé selon l'une des revendications 2 ou 3, **caractérisé en ce que** les limites clair-sombre (35a, 35b) verticales sont orientées par le fait que les angles de pivotement horizontaux des phares (1, 2) sont égaux, de sorte que les directions d'émission lumineuse (L) des phares (1, 2) sont orientées parallèlement l'une à l'autre.

5. Procédé selon l'une des revendications 2 ou 3, **caractérisé en ce que** des éléments mécaniques (8.1, 8.2) coulissants sont disposés dans le trajet de rayon des projecteurs (1, 2), lesquels génèrent les limites clair-sombre des faisceaux lumineux (30a, 30b), et les limites clair-sombre (35a, 35b) verticales sont orientées par coulissement des éléments mécaniques (8.1, 8.2).

6. Procédé selon l'une des revendications précédentes, **caractérisé en ce qu'**un mouvement de direction est détecté, la direction du mouvement de direction étant déterminée, les directions d'émission lumineuse (L) des deux phares (1, 2) sont pivotées dans la direction du mouvement de direction autour d'un axe vertical (V) de telle sorte que l'angle avec lequel les directions d'émission lumineuse (L) des phares (1, 2) sont pivotées autour de l'axe vertical (V) soit sensiblement égal après le pivotement, de sorte que les directions d'émission lumineuse (L) des phares (1, 2) sont orientées parallèlement l'une à l'autre.

7. Procédé selon la revendication 1 ou 2, **caractérisé en ce que** la consigne de navigation comprend une indication de direction en vue de maintenir un itinéraire souhaité, et
en vue de produire la distribution lumineuse totale (32), les limites clair-sombre (35a, 35b) verticales des faisceaux lumineux (30a, 30b) sont orientées de telle sorte que la zone (39) forme sur la voie de circulation un motif directionnel (31), les limites clair-sombre (35a, 35b) verticales étant orientées par pivotement des directions d'émission lumineuse (L) des deux phares (1, 2) autour d'un axe vertical (V).

8. Procédé selon la revendication 7, **caractérisé en ce que** pour une indication de direction droit devant, les directions d'émission lumineuse (L) des phares (1, 2) sont pivotées autour de l'axe vertical (V) de la même valeur angulaire l'un vers l'autre en partant d'une orientation parallèle des phares (1, 2) l'un par rapport à l'autre.

9. Procédé selon la revendication 7 ou 8, **caractérisé en ce que** pour une indication de direction vers la droite, au moins la direction d'émission lumineuse (L) du phare de gauche (2) est pivotée autour de l'axe vertical (V) vers la droite et/ou pour une indication de direction vers la gauche, au moins la direction d'émission lumineuse (L) du phare de droite (1) est pivotée autour de l'axe vertical (V) vers la gauche.

10. Procédé selon la revendication 9, **caractérisé en ce que** pour l'indication de direction vers la droite, la direction d'émission lumineuse (L) du phare de droite (1) est en plus pivotée autour de l'axe vertical (V) vers la droite et/ou pour l'indication de direction vers la gauche, la direction d'émission lumineuse (L) du phare de gauche (2) est en plus pivotée autour de l'axe vertical (V) vers la gauche.

11. Procédé selon l'une des revendications précédentes, **caractérisé en ce que** la distribution lumineuse totale (32, 33) est combinée avec la distribution lumineuse initiale (29, 30) et/ou une distribution lumineuse de marquage.

12. Procédé selon l'une des revendications précédentes, **caractérisé en ce que** la hauteur de faisceau de la distribution lumineuse totale (32, 33) est abaissée après ou pendant la formation de la zone (39).

13. Procédé selon l'une des revendications précédentes, **caractérisé en ce que** la distribution lumineuse initiale est une distribution de feu de croisement (29), une distribution de feu de croisement (29) asymétrique, une distribution de feu de circulation urbaine ou une distribution de feu de route continu (30) masquée.
